# EUROPEAN PATENT APPLICATION

(11) **EP 4 708 959 A1**
(43) Date of publication of application: **11.03.2026**
(21) Application number: 23948763.0
(22) Date of filing: 11.08.2023
(51) Int. Cl.: H04W 36/00

(54) **INSTRUCTION METHOD AND APPARATUS FOR CARRIER AGGREGATION, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN); LIN, Xue, Dongguan, Guangdong 523860 (CN)
(74) Representative: Novagraaf Technologies
(86) International application number: PCT/CN2023/112761
(87) International publication number: WO 2025/035328

(57) **Abstract**

An instruction method and apparatus for carrier aggregation, a device and a storage medium, relating to the technical field of mobile communications. The method is executed b a terminal and comprises: receiving an RRC reconfiguration message sent by a network device (301), the RRC reconfiguration message being used for carrying LTM candidate configuration information, and the LTM candidate configuration information being used for indicating the configuration of a candidate primary cell; performing L1 measurement on the candidate primary cell, and primary secondary cells and/or secondary cells associated with the candidate primary cell to obtain an L1 measurement report (302); reporting the L1 measurement report to the network device(303); and receiving first instruction information sent by the network device on the basis of the L1 measurement report(304), wherein the first instruction information is used for instructing the terminal to add and/or activate a primary secondary cell and/or a secondary cell for carrier aggregation.

## Description

### TECHNICAL FIELD

The present disclosure relates to the technical field of communications, and in particular, relates to a method and apparatus for indicating carrier aggregation, and a device and a storage medium thereof.

### RELATED ART

To support larger bandwidths, a communication system may jointly schedule and utilize resources on a plurality of component carriers (CCs) via carrier aggregation (CA).

In related arts, under carrier aggregation scenarios, subsequent to a terminal accessing a primary cell or completing handover of the primary cell, a network device may add and/or activate secondary cells for the terminal via signaling.

### SUMMARY

Embodiments of the present disclosure provide a method and apparatus for indicating carrier aggregation, and a device and a storage medium thereof. The technical solutions are as follows.

According to an aspect of the embodiments of the present disclosure, a method for indicating carrier aggregation is provided. The method is performed by a terminal, and the method includes:
receiving a radio resource control (RRC) reconfiguration message from a network device, wherein the RRC reconfiguration message is used to carry Layer 1 (L1)/Layer 2 (L2)-triggered mobility (LTM) candidate configuration information, wherein the LTM candidate configuration information is used to indicate a configuration of a candidate primary cell;
performing an L1 measurement on the candidate primary cell, and on a primary secondary cell and/or a secondary cell associated with the candidate primary cell to acquire an L1 measurement report;
reporting the L1 measurement report to the network device; and
receiving first indication information from the network device based on the L1 measurement report, wherein the first indication information is used to instruct the terminal to add and/or activate the primary secondary cell and/or the secondary cell for carrier aggregation.

According to an aspect of the embodiments of the present disclosure, a method for indicating carrier aggregation is provided. The method is performed by a network device, and the method includes:
transmitting an RRC reconfiguration message to a terminal, wherein the RRC reconfiguration message is used to carry LTM candidate configuration information, and the LTM candidate configuration information is used to indicate a configuration of a candidate primary cell;
receiving an L1 measurement report from the terminal, wherein the L1 measurement report is acquired by performing an L1 measurement on the candidate primary cell, and on a primary secondary cell and/or a secondary cell associated with the candidate primary cell; and
transmitting first indication information to the terminal based on the L1 measurement report, wherein the first indication information is used to instruct the terminal to add and/or activate the primary secondary cell and/or the secondary cell for carrier aggregation.

According to another aspect of the embodiments of the present disclosure, an apparatus for indicating carrier aggregation is provided. The apparatus includes:
a receiving module, configured to receive an RRC reconfiguration message from a network device, wherein the RRC reconfiguration message is used to carry LTM candidate configuration information, wherein the LTM candidate configuration information is used to indicate a configuration of a candidate primary cell;
a measurement module, configured to perform an L1 measurement on the candidate primary cell and the primary secondary cell and/or the secondary cell associated with the candidate primary cell to acquire an L1 measurement report; and
a transmitting module, configured to report the L1 measurement report to the network device;
wherein the receiving module is further configured to receive first indication information from the network device based on the L1 measurement report, wherein the first indication information is used to instruct the terminal to add and/or activate the primary secondary cell and/or the secondary cell for carrier aggregation.

According to another aspect of the embodiments of the present disclosure, an apparatus for indicating carrier aggregation is provided. The apparatus includes:
a transmitting module, configured to transmit an RRC reconfiguration message to a terminal, wherein the RRC reconfiguration message is used to carry LTM candidate configuration information, wherein the LTM candidate configuration information is used to indicate a configuration of a candidate primary cell; and
a receiving module, configured to receive an L1 measurement report from the terminal, which is acquired by performing an L1 measurement on the candidate primary cell, and on a primary secondary cell and/or a secondary cell associated with the candidate primary cell;
wherein the transmitting module is further configured to transmit first indication information to the terminal based on the L1 measurement report, wherein the first indication information is used to instruct the terminal to add and/or activate the primary secondary cell and/or the secondary cell for carrier aggregation.

According to another aspect of the embodiments of the present disclosure, a terminal is provided. The terminal includes a processor, a memory, and a transceiver.

The memory stores one or more computer programs. The processor, when running the one or more computer programs, causes the terminal to perform the method for indicating carrier aggregation.

According to another aspect of the embodiments of the present disclosure, a network device is provided. The device includes a processor, a memory, and a transceiver.

The memory stores one or more computer programs. The processor, when running the one or more computer programs, causes the network device to perform the method for indicating carrier aggregation.

According to another aspect of the embodiments of the present disclosure, a computer-readable storage medium is provided. The computer-readable storage medium stores one or more computer programs. The one or more computer programs, when run by a processor, cause the processor to perform the method for indicating carrier aggregation as described above.

According to another aspect of the embodiments of the present disclosure, a chip is provided. The chip, when running on a communication device, causes the communication device to perform the method for indicating carrier aggregation as described above.

According to another aspect of the embodiments of the present disclosure, a computer program product is provided. The computer program product includes one or more computer instructions, wherein the one or more computer instructions are stored in a computer-readable storage medium. The one or more computer instructions, when read from the computer-readable storage medium and executed by a processor of a communication device, causes the communication device to perform the method for indicating carrier aggregation as described above.

According to another aspect of the embodiments of the present disclosure, a computer program is provided. The computer program, when run by a processor of a communication device, causes the communication device to perform the method for indicating carrier aggregation as described above.

The embodiments of the present disclosure provide a scheme for indicating carrier aggregation. During an LTM procedure, the terminal may perform the L1 measurement on the primary secondary cell and/or the secondary cell associated with the candidate primary cell indicated by the RRC reconfiguration message, and the terminal reports the L1 measurement report to the network device. The network device instructs the terminal to add and/or activate the primary secondary cell and/or the secondary cell for carrier aggregation based on the L1 measurement report. In other words, during a cell handover procedure of the terminal, the addition and/or activation of the primary secondary cell and/or the secondary cell for carrier aggregation may be completed, thereby significantly shortening the time required for the terminal to establish multi-carrier CA or dual-connectivity (DC) and improving the efficiency of establishing multi-carrier CA or DC.

### BRIEF DESCRIPTION OF DRAWINGS

FIG. 1 is a schematic diagram of an architecture of a communication system according to some embodiments of the present disclosure;
FIG. 2 is an overall flowchart of an LTM involved in the present disclosure;
FIG. 3 is a flowchart of a method for indicating carrier aggregation according to some embodiments of the present disclosure;
FIG. 4 is a flowchart of a method for indicating carrier aggregation according to some embodiments of the present disclosure;
FIG. 5 is a flowchart of a method for indicating carrier aggregation according to some embodiments of the present disclosure;
FIG. 6 is a flowchart of a secondary cell addition and/or activation involved in the present disclosure;
FIG. 7 is a schematic diagram of configuration information involved in the present disclosure;
FIG. 8 is a flowchart of a primary secondary cell addition and/or activation involved in the present disclosure;
FIG. 9 is a schematic diagram of configuration information involved in the present disclosure;
FIG. 10 is another flowchart of the secondary cell addition and/or activation involved in the present disclosure;
FIG. 11 is a schematic diagram of configuration information involved in the present disclosure;
FIG. 12 is a block diagram of an apparatus for indicating carrier aggregation according to some embodiments of the present disclosure;
FIG. 13 is a block diagram of an apparatus for indicating carrier aggregation according to some embodiments of the present disclosure; and
FIG. 14 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architectures and service scenarios described in the embodiments of the present disclosure are intended to more clearly illustrate the technical solutions according to the embodiments of the present disclosure and do not constitute a limitation on the technical solutions according to the embodiments of the present disclosure. Persons skilled in the art will appreciate that, with the evolution of network architectures and the emergence of new service scenarios, the technical solutions according to the embodiments of the present disclosure are applicable to address similar technical problems.

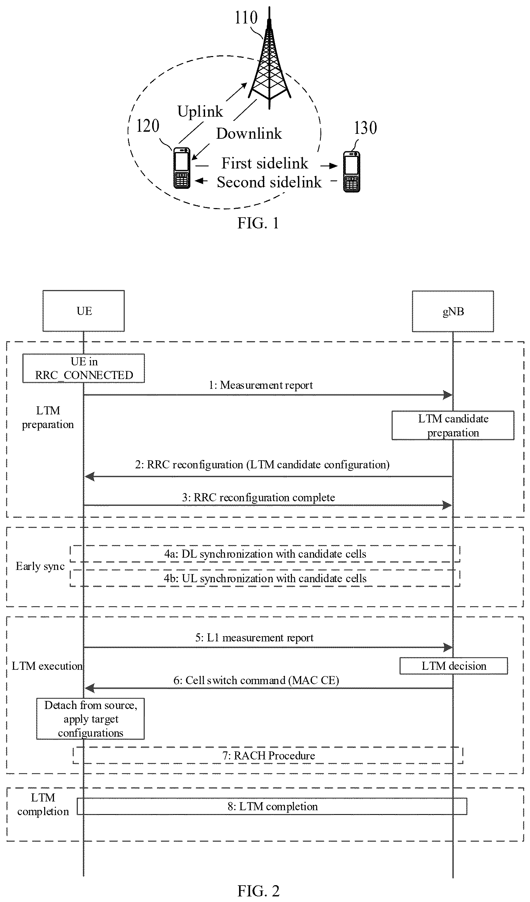

FIG. 1 illustrates a schematic diagram of a communication system according to some embodiments of the present disclosure. The communication system includes a network device 110, a terminal 120 and optionally may further includes a terminal 130, which are not limited in the present disclosure.

The network device 110 in the present disclosure provides wireless communication functions. The network device includes but not limited to: an evolved Node-B (eNB), a radio network controller (RNC), a Node-B (NB), a base station controller (BSC), a base transceiver station (BTS), a home base station (e.g., a home evolved Node-B , or a home Node-B, HNB), a baseband unit (BBU), an access point (AP) in a wireless fidelity (Wi-Fi) system, a wireless relay node, a wireless backhaul node, a transmission point (TP) or a transmission and reception point (TRP), or the like. It may also be a next generation Node-B (gNB) or a transmission reception point (a TRP or a TP) in a 5th generation (5G) mobile communication system, or one or a set of antenna panels (including a plurality of antenna panels) of a base station in the 5G system, or a network node constituting a gNB or a transmission point, such as a baseband unit (BBU) or a distributed unit (DU) or the like, or a base station in a beyond 5th generation (B5G), a 6th generation (6G) mobile communication system, or the like, or a core network (CN), a fronthaul, a backhaul, a radio access network (RAN), a network slice or the like, or a serving cell, a primary cell (PCell), a primary secondary cell (PSCell), a special Cell (SpCell), a secondary cell (SCell), a neighbor cell, or the like of the terminal.

The terminal 120 and/or the terminal 130 in the present disclosure is also known as a UE, an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal 120 communicate with each other using an air interface technology, such as a Uu interface.

In some embodiments, two communication scenarios are present between the network device 110 and the terminal 120: an uplink communication scenario and a downlink communication scenario. The uplink communication refers to transmitting signals to the network device 110; and the downlink communication refers to transmitting signals to the terminal 120.

The terminal 120 and the terminal 130 communicate with each other using an air interface technology, such as a PC5 interface.

In some embodiments, two communication scenarios are present between the terminal 120 and the terminal 130: a first sidelink communication scenario and a second sidelink communication scenario. The first sidelink communication refers to transmitting signals to the terminal 130; and the second sidelink communication refers to transmitting signals to the terminal 120.

Both of the terminal 120 and the terminal 130 are within a network coverage and located in the same cell; or both of the terminal 120 and the terminal 130 are within the network coverage but located in different cells; or the terminal 120 is within the network coverage, but the terminal 130 is outside the network coverage.

The technical solutions according to the embodiments of the present disclosure may be applied to various communication systems, such as: a global system of mobile communication (GSM) system, a code-division multiple access (CDMA) system, a wideband code-division multiple access (WCDMA) system, a general packet radio service (GPRS) system, a long-term evolution (LTE) system, an LTE frequency-division duplex (FDD) system, an LTE time division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things (IoT) system, a cellular passive Internet of things system, and may also be applied to the subsequent evolution systems of a 5G NR system, and may also be applied to B5G, 6G, and subsequent evolution systems. In some embodiments of the present disclosure, "NR" may also be referred to as a 5G NR system or 5G system. Among them, the 5G mobile communication system may include non-standalone (NSA) and/or standalone (SA).

The technical solutions according to the embodiments of the present disclosure may also be applied to a machine-type communications (MTC), a long-term evolution-machine (LTE-M), a device-to-device (D2D) network, a machine-to-machine (M2M) network, an IoT network, or other networks. The IoT network may include an Internet of vehicles. The communication methods in the Internet of vehicles system are collectively referred to as vehicle-to-X (V2X, X represents anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

### 1) Carrier aggregation (CA)

The CA enables an NR system to support larger bandwidths by jointly scheduling and utilizing resources on a plurality of CCs, such that the NR system achieves a higher system peak rate. Based on spectral continuity of aggregated carriers, the CA may be categorized into: contiguous CA and non-contiguous CA. Based on whether the aggregated carriers reside within the same frequency band, the CA may be categorized into: intra-band CA and inter-band CA.

There is exactly one primary component carrier (PCC). The PCC provides radio resource control (RRC) signaling connection, non-access stratum (NAS) functionality, security control, and other services. The physical uplink control channel (PUCCH) is located and only exists on the PCC. A secondary component carrier (SCC) only provides additional radio resources. The PCC and the SCC are collectively referred to as serving cells. Standards also stipulate that a maximum of five carriers may be aggregated, which means that the maximum bandwidth subsequent to aggregation is 100 MHz, and the aggregated carriers belong to the same base station. All aggregated carriers use the same cell-radio network temporary identifier (C-RNTI), and the base station ensures that the C-RNTI is not in collision across the cells where each carrier is located. Since both asymmetric CA and symmetric CA are supported, the aggregated carriers need to have a downlink, though an uplink is not mandatory. The primary carrier cell needs to have its own physical downlink control channel (PDCCH) and PUCCH. Only the primary carrier cell has a PUCCH and other secondary carrier cells may have a PDCCH.

### 2) Secondary cell (SCell) activation

The SCell is configured via RRC dedicated signaling and is initially in a deactivated state. No data transmission or reception is possible in the deactivated state. Upon activation via a medium access control (MAC) control element (CE), data transmission or reception becomes possible. From the perspective of delays in SCell configuration and activation, the architecture is not optimal.

The activation, deactivation, addition, and removal of the secondary carrier may all cause an interruption in data transmission of a UE. Specific requirements are defined in sections 8.2.4.2.1 and 8.2.4.2.2 of the 3GPP protocol TS 38.133, which cover different interruption scenarios resulting from the activation and deactivation of the secondary carrier in intra-band and inter-band dual-connectivity (DC) or CA. All these requirements are defined based on a synchronization signal and physical broadcast channel (PBCH) block (SSB) signal, including an SSB-based automatic gain control (AGC) configuration and SSB-based timing tracking.

### 3) L1/L2-triggered mobility (LTM)

LTM is a PCell (or PSCell) cell switch procedure that the network triggers via the MAC CE based on L1 measurements.

LTM is a procedure in which a gNB receives an L1 measurement report from a UE, and the gNB changes the serving cell of the UE by a cell switch command signaled via the MAC CE. The cell switch command indicates an LTM candidate cell configuration that the gNB previously prepared and provided to the UE via the RRC signaling. Then the UE switches to the target cell according to the cell switch command. The LTM procedure may be used to reduce the mobility latency.

The network may request the UE to perform an early timing advance (TA) acquisition of a candidate cell before a cell switch. The early TA acquisition is triggered by a PDCCH order (or via a UE-based TA measurement).

RANI confirmed a working assumption to support the UE-based TA measurement (The UE derives TA based on Rx timing difference between current serving cell and candidate cell as well as a TA value for the current serving cell).

The network indicates in the cell switch command whether the UE shall access the target cell with a random access (RA) procedure in a case where the TA value is not provided or with PUSCH transmission using the indicated TA value. For Random Access Channel (RACH) -less LTM, the UE either monitors the PDCCH for dynamic scheduling from the target cell upon LTM cell switch, or the UE selects a configured grant occasion associated with a beam indicated in the cell switch command.

Upon cell switch decision, R2 assumes that the source distributed unit (DU) informs the target DU about the selected beam, such that the target DU may start scheduling dynamic UL grant.

The following principles apply to LTM:
The UE does not update its security key in LTM.

Subsequent LTM is supported.

LTM supports both intra-gNB-DU mobility and inter-gNB-DU mobility between intra-gNB-CU. LTM also supports inter-frequency mobility, including mobility to inter-frequency cell that is not a current serving cell. The following scenarios are supported:
PCell change in non-CA scenario;
PCell change in CA scenario; and

Dual connectivity scenario, at least for the PSCell change without master node (MN) involvement case, i.e., intra-Secondary Node (SN) PSCell change.

A supervision timer may be used to detect failure of LTM cell switch procedure, wherein LTM procedure fails in a case where the LTM supervision timer expires, upon which the UE initiates RRC connection re-establishment procedure.

While the UE has stored LTM candidate cell configurations, the UE may also execute any L3 handover command transmitted by the network. It is up to the network to avoid any issue due to a collision between LTM execution and L3 handover execution, e.g., avoiding transmitting LTM cell switch command and L3 handover command simultaneously.

Cell switch command is conveyed in the MAC CE, which contains the necessary information to perform the LTM cell switch.

The overall procedure for LTM is illustrated in FIG. 1. Subsequent LTM is done by repeating the early synchronization, LTM execution, and LTM completion steps without releasing other LTM candidate cell configurations subsequent to each LTM completion.

As illustrated in FIG. 2, the LTM procedure is as follows:
In S1, the UE transmits a MeasurementReport message to the gNB. The gNB decides to configure LTM and initiates candidate cell preparation.

In S2, the gNB transmits an RRCReconfiguration message to the UE including the LTM candidate cell configurations of one or multiple candidate cells.

In S3, the UE stores the LTM candidate cell configurations, and transmits an RRCReconfigurationComplete message to the gNB.

In S4a, the UE [may] performs DL synchronization with the candidate cell before receiving the cell switch command.

DL synchronization for the candidate cell before cell switch command is supported, at least based on SSB.

In S4b, the UE [may] performs early TA acquisition with the candidate cell requested by the network before receiving the cell switch command. This is done via contention-free random access (CFRA) triggered by a PDCCH order from the source cell, following which the UE transmits preamble towards the indicated candidate cell. In order to minimize the data interruption of the source cell due to CFRA towards the candidate cell, the UE does not receive random access response (RAR) for the purpose of TA value acquisition and the TA value of the candidate cell is indicated in the cell switch command. The UE does not maintain the TA timer for the candidate cell and relies on network implementation to guarantee the TA validity.

In S5, the UE performs the L1 measurement on the configured candidate cell, and transmits a lower-layer measurement report to the gNB. The L1 measurement should be performed as long as apply the RRC reconfiguration in S2.

In S6, the gNB decides to execute cell switch to a target cell, and transmits a MAC CE triggering cell switch by including the candidate configuration index of the target cell. The UE switches to the target cell and applies the configuration indicated by candidate configuration index.

In S7, the UE performs the random access procedure towards the target cell in a case where the UE does not have valid TA of the target cell.

In S8, the UE completes the LTM cell switch procedure [by transmitting RRCReconfigurationComplete message to target cell]. In a case where the UE has performed a RA procedure in S7, the UE considers that LTM has been successfully completed in a case where the random access procedure has been successfully completed. For RACH-less LTM, the UE considers that LTM has beensuccessfully completed in a case where the UE determines that the network has successfully received its first UL data.

RAN2 assumes that the RRCReconfigurationComplete message is always transmitted at each LTM execution.

The steps 4-8 may be performed multiple times for subsequent LTM cell switch using the LTM candidate cell configuration provided in S2.

Currently, the MAC CE in S6 may include a transmission configuration indicator (TCI) state, TA, and candidate index. The candidate index refers to the configuration related to a specific candidate cell in the LTM candidate configuration in S2 (i.e., the candidate configuration index of the target cell).

For example, CellgroupConfig is included in RRCReconfiguration. CellgroupConfig contains spCellConfig, sCellToAddModList, and sCellToReleaseList, which are used to configure the PCell and SCell respectively. Upon receiving the configuration, the UE may use the information to distinguish between the configuration for the PCell and that for the SCell.

UE mobility measurements (e.g., LTM measurements) primarily focus on evaluating the candidate PCell. Embodiments hereinafter of the present disclosure provide a solution: the network retains both the PCell and the SCell under the same master cell group (MCG) in candidate cells configured in RRC reconfiguration. The candidate PCell and the candidate SCell are associated in advance either via a pre-configuration (S2 in FIG. 2 above) or a MAC CE indication (S6 in FIG. 2 above). The UE may measure all of them in advance during the LTM procedure (S5 in FIG. 2 above) to acquire preliminary evaluation results. Subsequent to completing the LTM-based PCell handover by indicating the candidate configuration index (S8 in FIG. 2 above), the UE may simultaneously complete the addition/activation of the SCell. This eliminates the procedure and the delay for reissuing SCell-related configurations and performing measurements, thereby significantly reducing the time required for the UE to establish multi-carrier CA or DC.

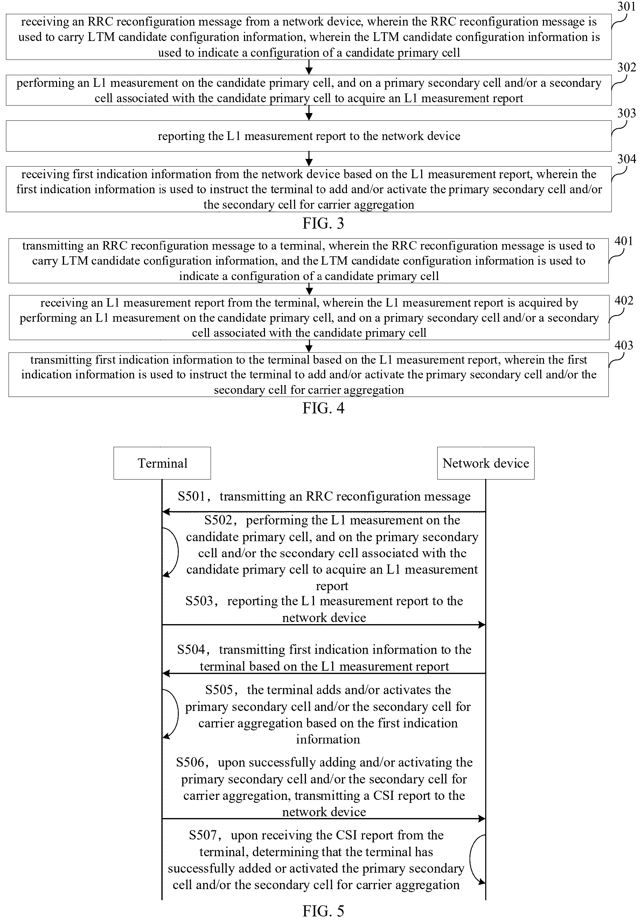

FIG. 3 illustrates a flowchart of a method for indicating carrier aggregation according to some embodiments of the present disclosure. The method may be performed by a terminal, wherein the terminal may be the terminal 120 in the network architecture illustrated in FIG. 1. The method may include the following steps.

In S301, the terminal receives an RRC reconfiguration message from a network device, wherein the RRC reconfiguration message is used to carry LTM candidate configuration information, wherein the LTM candidate configuration information is used to indicate a configuration of a candidate primary cell.

The RRC reconfiguration message may be an RRC message transmitted by the network device in response to the terminal transmitting a MeasurementReport message to the network device, and the network device decides to configure LTM and trigger the preparation of candidate cells based on the report.

The RRC reconfiguration message may indicate at least the configuration of the candidate primary cell.

In S302, the terminal performs an L1 measurement on the candidate primary cell, and on a primary secondary cell and/or a secondary cell associated with the candidate primary cell to acquire an L1 measurement report.

In the embodiments of the present diaclosure, during the LTM procedure, in addition to performing the L1 measurement on the candidate primary cell, the terminal may also perform the L1 measurement on the primary secondary cell and/or the secondary cell associated with the candidate primary cell.

In S303, the terminal reports the L1 measurement report to the network device.

In S304, the terminal receives first indication information from the network device based on the L1 measurement report, wherein the first indication information is used to instruct the terminal to add and/or activate the primary secondary cell and/or the secondary cell for carrier aggregation.

In the embodiments of the present disclosure, in a case where the network device determines to instruct the terminal to perform cell handover based on the L1 measurement report, the network device may also transmit the first indication information based on the L1 measurement report to instruct the terminal to add and/or activate the primary secondary cell and/or the secondary cell for carrier aggregation.

In summary, the embodiments of the present disclosure provide a scheme for indicating carrier aggregation. During an LTM procedure, the terminal may perform the L1 measurement on the primary secondary cell and/or the secondary cell associated with the candidate primary cell indicated by the RRC reconfiguration message, and the terminal reports the L1 measurement report to the network device. The network device instructs the terminal to add and/or activate the primary secondary cell and/or the secondary cell for carrier aggregation based on the L1 measurement report. In other words, during a cell handover procedure of the terminal, the addition and/or activation of the primary secondary cell and/or the secondary cell for carrier aggregation may be completed, thereby significantly shortening the time required for the terminal to establish multi-carrier CA or dual-connectivity (DC) and improving the efficiency of establishing multi-carrier CA or DC.

FIG. 4 illustrates a flowchart of a method for indicating carrier aggregation according to some embodiments of the present disclosure. The method may be performed by a network device, wherein the network device may be the network device 110 in the network architecture illustrated in FIG. 1. The method may include the following steps.

In S401, the network device transmits an RRC reconfiguration message to a terminal, wherein the RRC reconfiguration message is used to carry LTM candidate configuration information, and the LTM candidate configuration information is used to indicate a configuration of a candidate primary cell.

In S402, the network device receives an L1 measurement report from the terminal, wherein the L1 measurement report is acquired by performing an L1 measurement on the candidate primary cell, and on a primary secondary cell and/or a secondary cell associated with the candidate primary cell.

In S403, the network device transmits first indication information to the terminal based on the L1 measurement report, wherein the first indication information is used to instruct the terminal to add and/or activate the primary secondary cell and/or the secondary cell for carrier aggregation.

In summary, the embodiments of the present disclosure provide a scheme for indicating carrier aggregation. During an LTM procedure, the terminal may perform the L1 measurement on the primary secondary cell and/or the secondary cell associated with the candidate primary cell indicated by the RRC reconfiguration message, and the terminal reports the L1 measurement report to the network device. The network device instructs the terminal to add and/or activate the primary secondary cell and/or the secondary cell for carrier aggregation based on the L1 measurement report. In other words, during a cell handover procedure of the terminal, the addition and/or activation of the primary secondary cell and/or the secondary cell for carrier aggregation may be completed, thereby significantly shortening the time required for the terminal to establish multi-carrier CA or dual-connectivity (DC) and improving the efficiency of establishing multi-carrier CA or DC.

Based on the embodiments illustrated in FIG. 3 and FIG. 4, FIG. 5 illustrates a flowchart of a method for indicating carrier aggregation according to some embodiments of the present disclosure. The method may be performed via interactions between a terminal and a network device, wherein the network device may be the network device 110 in the network architecture illustrated in FIG. 1, and the terminal may be the terminal 120 in the network architecture illustrated in FIG. 1. The method may include the following steps.

In S501, the network device transmits an RRC reconfiguration message to a terminal and the terminal receives the RRC reconfiguration message, wherein the RRC reconfiguration message is used to carry LTM candidate configuration information, and the LTM candidate configuration information is used to indicate a configuration of a candidate primary cell.

The RRC reconfiguration message may be the RRC reconfiguration message transmitted by the network device to the terminal during the LTM procedure.

For example, the terminal may report a measurement report to the network device. After that, in a case where the network device decides to configure LTM and trigger the preparation of candidate cells based on the report, the network device may transmit the RRC reconfiguration message to the terminal.

The RRC reconfiguration message is used to configure LTM candidate configuration information for the terminal, so as to instruct the terminal to perform subsequent L1 measurements, such that the network device is enabled to trigger the terminal to perform cell handover based on an L1 measurement result of the terminal.

In some embodiments, the LTM candidate configuration information includes one or more LTM candidate cell configurations.

In embodiments of the present disclosure, the network device (e.g., a gNB) transmits an RRCReconfiguration message to the UE, which includes at least one or more LTM candidate cell configurations (candidate cell configurations, which may be associated with indexes of different cells) and is used to instruct the terminal to perform subsequent L1 measurements.

In some embodiments, the candidate cell configuration includes at least one of:
a measurement configuration for the candidate primary cell, which may be used by the terminal to measure the candidate primary cell;
a measurement configuration for a candidate primary secondary cell, which may be used by the terminal to measure the candidate primary secondary cell corresponding to the candidate primary cell;
a measurement configuration for the secondary cell associated with the candidate primary cell, which may be used by the terminal to measure the secondary cell associated with the candidate primary cell; or
a measurement configuration for a secondary cell associated with a candidate primary secondary cell, which may be used by the terminal to measure the secondary cell associated with the candidate primary secondary cell.

Upon receiving the RRC reconfiguration message, the terminal may perform downlink synchronization with the candidate primary cell, and/or perform the downlink synchronization with the candidate primary secondary cell.

In S502, the terminal performs the L1 measurement on the candidate primary cell, and on the primary secondary cell and/or the secondary cell associated with the candidate primary cell to acquire an L1 measurement report.

In some embodiments, the terminal may perform the L1 measurement on the candidate primary cell, and on the primary secondary cell and/or the secondary cell associated with the candidate primary cell to acquire the L1 measurement report based on the measurement configuration in the candidate cell configuration.

For example, for each candidate cell configuration, the terminal sequentially performs the L1 measurement on the candidate primary cell, and on the primary secondary cell and/or the secondary cell associated with the candidate primary cell in the candidate cell configuration.

In S503, the terminal reports the L1 measurement report to the network device, and the network device receives the L1 measurement report from the terminal.

The terminal may report the L1 measurement result via lower-layer measurement reports. Different from an L3 report, the L1 measurement report may be carried in L1 (e.g., physical uplink shared channel (PUSCH) or uplink control information (UCI)) or the MAC CE.

In S504, the network device transmits first indication information to the terminal based on the L1 measurement report, and the terminal receives the first indication information from the network device based on the L1 measurement report, wherein the first indication information is used to instruct the terminal to add and/or activate the primary secondary cell and/or the secondary cell for carrier aggregation.

In some embodiments, in a case where the network device determines to instruct the terminal to hand over to a target cell based on the L1 measurement report, the network device may simultaneously instruct the terminal to add and/or activate the primary secondary cell and/or the secondary cell for carrier aggregation. Adding and/or activating the primary secondary cell and/or the secondary cell for carrier aggregation may refer to adding and/or activating the primary secondary cell and/or the secondary cell for carrier aggregation corresponding to the primary cell subsequent to a handover of the terminal (e.g., the target cell for the handover).

In some embodiments, an association between a primary cell of the terminal and the primary secondary cell and/or the secondary cell for carrier aggregation is indicated by association information;
wherein the association information is configured by the first indication information; or the association information is configured by the RRC reconfiguration message and is indicated to take effect by the first indication information.

The association between the primary secondary cell and/or the secondary cell for carrier aggregation and the corresponding primary cell may be indicated or configured by the network device at the same time when the network device instructs the terminal to hand over to the target cell. In other words, the first indication information is used to indicate or configure the primary secondary cell and/or the secondary cell for carrier aggregation that are associated with the primary cell of the terminal subsequent to a cell handover of the terminal.

Alternatively, the association between the primary secondary cell and/or the secondary cell for carrier aggregation and the corresponding primary cell may also be indicated by the network device when transmitting the RRC reconfiguration message. In other words, when transmitting the RRC reconfiguration message, the network device may configure the associated primary secondary cell and/or secondary cell for each candidate primary cell.

In some embodiments, the association information includes at least one of:
identification information of the primary secondary cell associated with the primary cell, identification information of the secondary cell associated with the primary cell, or identification information of the secondary cell associated with the primary secondary cell.

For example, in a case where the configured primary secondary cell and/or secondary cell for carrier aggregation include the primary secondary cell, the association information may contain identification information of the primary secondary cell (e.g., a cell index of the primary secondary cell), and the identification information of the primary secondary cell is associated with the identification information of the primary cell (which may also be referred to as the candidate primary cell in a case where configured via the RRC reconfiguration message).

For example, in a case where the configured primary secondary cell and/or secondary cell for carrier aggregation include the secondary cell, the association information may contain identification information of the secondary cell (e.g., an index, an ID, or a group ID of the secondary cell), and the identification information of the secondary cell is associated with the identification information of the primary cell or the identification information of the primary secondary cell.

In some embodiments, in a case where the association information is configured by the RRC reconfiguration message and is indicated to take effect by the first indication information, the first indication information includes a control indication; wherein in a case where the control indication takes a true value, the first indication information is used to instruct to add and/or activate the primary secondary cell and/or the secondary cell associated with the primary cell.

In some embodiments, in a case where the control takes a false value, the first indication information is used to instruct not to add and/or activate the primary secondary cell and/or the secondary cell associated with the primary cell.

In the case where the association information is configured by the RRC reconfiguration message and is indicated to take effect by the first indication information, the RRC reconfiguration message may carry association information, and each piece of association information corresponds to one candidate primary cell and the primary secondary cell and/or the secondary cell associated with the candidate primary cell. In S504, in a case where the network device determines to instruct the terminal to hand over to a primary cell, the network device may carry the identification information (e.g., an index) of the primary cell in the first indication information. Meanwhile, the network device may also carry a control indication in the first indication information, which is used to control whether to add and/or activate the primary secondary cell and/or the secondary cell for carrier aggregation associated with the primary cell. For example, in a case where the network device determines that the primary secondary cell and/or the secondary cell for carrier aggregation associated with the primary cell needs to be added and/or activated based on the L1 measurement result (e.g., the signal quality of the primary secondary cell and/or the secondary cell for carrier aggregation associated with the primary cell satisfies a requirement for addition and/or activation), the control indication carried in the first indication information takes a true value. Conversely, in a case where the network device determines that the primary secondary cell and/or the secondary cell for carrier aggregation associated with the primary cell does not need to be added and/or activated based on the L1 measurement result (e.g., the signal quality of the primary secondary cell and/or the secondary cell for carrier aggregation associated with the primary cell does not satisfy the requirement for addition and/or activation), the control indication carried in the first indication information takes a false value.

In some embodiments, the value of the control indication may also be replaced by other types of values. For example, the "true" may be replaced by "1" and the "false" by "0"; or the "true" may be replaced by "0" and the "false" by "1". Herein, the type of the value of the control indication is not limited in the embodiments of the present disclosure.

In S505, the terminal adds and/or activates the primary secondary cell and/or the secondary cell for carrier aggregation based on the first indication information.

In a case where the first indication information indicates the addition and/or activation of the primary secondary cell and/or the secondary cell for carrier aggregation, the terminal may add the cell indicated by the first indication information as the secondary cell and/or the primary secondary cell of the primary cell upon the handover.

In some embodiments, in a case where the first indication information instructs the terminal to add and/or activate the primary secondary cell and the terminal has completed the downlink synchronization with the primary secondary cell, the terminal adds and/or activates the primary secondary cell for carrier aggregation; or in a case where the first indication information instructs the terminal to add and/or activate the primary secondary cell and the terminal has not completed the downlink synchronization with the primary secondary cell, the terminal initiates a random access procedure to the primary secondary cell, and upon completion of the random access procedure, adds and/or activates the primary secondary cell for carrier aggregation.

For the primary secondary cell, the terminal needs to perform downlink synchronization with the primary secondary cell. In this regard, prior to adding the primary secondary cell, in a case where the terminal has already completed synchronization with the primary secondary cell earlier (e.g., prior to S502), the terminal may directly add and/or activate the primary secondary cell. In a case where synchronization with the primary secondary cell has not been completed, the terminal may initiate the random access procedure to the primary secondary cell, and add and/or activate the primary secondary cell upon completion of the random access procedure.

In S506, upon successfully adding and/or activating the primary secondary cell and/or the secondary cell for carrier aggregation, the terminal transmits a channel status indicator (CSI) report to the network device.

For example, upon successfully adding and/or activating the primary secondary cell and/or the secondary cell for carrier aggregation, the terminal may generate the CSI report corresponding to the primary secondary cell and/or the secondary cell, and feed the CSI report to the network device.

In S507, upon receiving the CSI report from the terminal, the network device determines that the terminal has successfully added or activated the primary secondary cell and/or the secondary cell for carrier aggregation.

For example, upon receiving the CSI report corresponding to the primary secondary cell and/or the secondary cell reported by the terminal, the network device may consider that the terminal has successfully added or activated the primary secondary cell and/or the secondary cell.

Embodiments of the present disclosure provide an LTM-based SCell addition/activation procedure, which further includes two configuration-related enhanced features:
1) RRC reconfiguration enhancement: An association between the configurations of the candidate Pcell and SCell and the configuration index in the LTM switch command is established; that is, an association between the configurations of candidate primary/secondary cells and the configuration index in the LTM switch command is established.
2) LTM switch command MAC CE enhancement:The function of "Scell addition and activation directly" (direct addition and activation of the secondary cell via LTM switch command) is introduced.

The LTM-based SCell addition/activation procedure may be divided into three scenarios, namely the addition and/or activation of the secondary cell associated with the primary cell, the addition and/or activation of the primary secondary cell, and the addition and/or activation of the secondary cell associated with the primary secondary cell. The three scenarios are introduced respectively as follows.

### I. MCG SCell addition/activation based on the LTM measurement

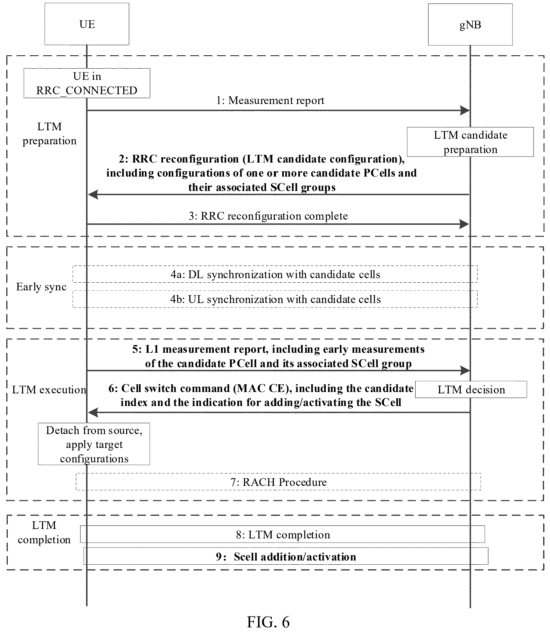

FIG. 6 illustrates a flowchart of the secondary cell addition and/or activation involved in the present disclosure. As illustrated in FIG. 6, the addition and/or activation flow of the secondary cell of primary cell group based on the LTM measurement may include the following steps.

In S1, the UE transmits a MeasurementReport message to the gNB. The gNB decides to configure LTM and initiates candidate cells preparation.

In S2, the gNB transmits an RRCReconfiguration message to the UE, which includes at least one or more LTM candidate cell configurations (and may be associated with different indexes).

For example, multiple candidate cells are grouped, where cell 1 is associated with cell 2/3, and cell 4 is associated with cell 5/6. Cell 1 and cell 4 are candidate Pcells, while cell 2/3 and cell 5/6 are their respective secondary carriers, all of which are secondary carriers under the MCG.

In S3, the UE stores the LTM candidate cell configurations, and transmits an RRCReconfigurationComplete message to the gNB.

In S4a, optionally, the UE performs DL synchronization with the candidate cell, which at least includes DL synchronization with candidate Pcells. Optionally, the UE performs early TA acquisition with the candidate cell, where the network configures which cells and TA are involved. This is done via the CFRA triggered by the PDCCH order from the source cell, and the TA value of the candidate cell is indicated in the cell switch command.

In S5, the UE performs L1 measurements on the configured candidate cells and transmits measurement reports to the gNB (lower-layer measurement reports, which, unlike L3 reports, may be carried in L1 (e.g., PUSCH or UCI) or MAC CE). The L1 measurement shall be performed in accordance with the configuration requirements specified in the RRC reconfiguration in S2.

Wherein the measurement configuration of the Scell associated with the candidate target cell is retained in the candidate cell configuration, and a preliminary evaluation result is acquired via early measurements.

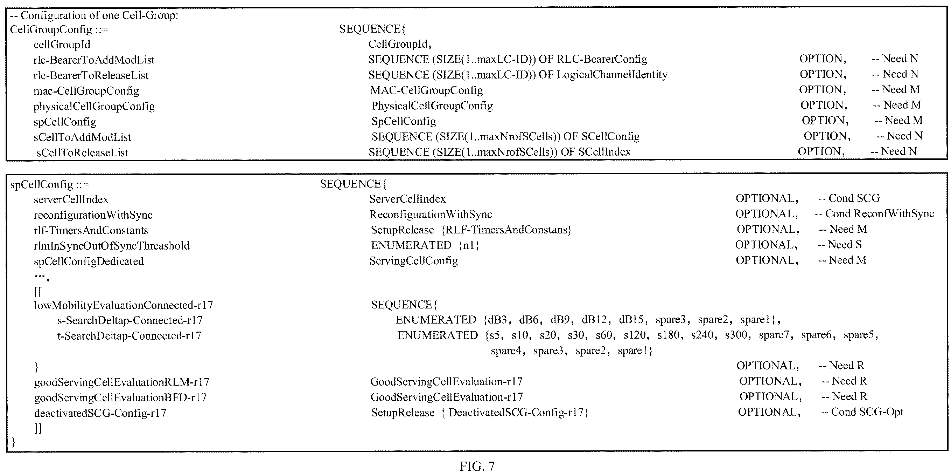

In S6, the gNB decides to perform cell handover to the target cell and transmits a MAC CE for cell handover (which at least includes the candidate configuration index of the target cell). The UE hands over to the target cell, and the configuration associated with the candidate configuration index takes effect, which at least includes SPCellConfig and Scell to add Mod list. A schematic diagram of the configuration information may be illustrated in FIG. 7.

In addition to indicating the configuration index of the candidate Pcell, the MAC CE may also carry the index of the candidate Scell, which is used for the addition/activation of the Scell associated with the candidate Pcell. The index of the Scell may also be empty, meaning there is no secondary cell that satisfies the activation criteria or no secondary cell is to be activated.

Alternatively, in addition to indicating the configuration index of the candidate Pcell, the MAC CE may also carry an indication of whether to add/activate the LTM Scell. In a case where the measurement results of the Scell associated with the candidate Pcell also satisfy the criteria (e.g., satisfying accuracy and measurement thresholds), the indication for adding/activating the LTM Scell takes a true value; otherwise, the indication takes a false value.

In S7, optionally, in a case where the UE has not acquired a valid TA for the target cell, the UE initiates a random access procedure to the target cell.

In S8, the UE completes the LTM cell switch and transmits the RRCReconfigurationComplete message to the target cell. In a case where the UE has performed and successfully completed the random access procedure in S7, the UE considers that the LTM has been successfully completed. For the RACH-less LTM procedure, the UE considers that the LTM has been successfully completed in a case where the network successfully receives the first uplink data message.

In a case where the MAC CE in S6 indicates the addition/activation of the Scell associated with the candidate Pcell (e.g., the scell configuration index/scell index is configured, and/or the indication for adding/activating the LTM Scell takes a true value), the UE initiates the addition/activation of the Scell, saving processes such as synchronization, measurement, and reporting. The UE considers that the Scell has been successfully added/activated upon transmitting the CSI report.

### II. SCG addition/activation based on the LTM measurement

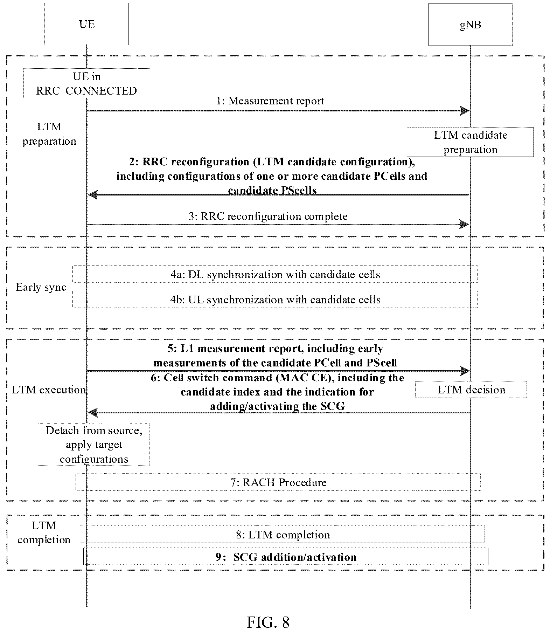

FIG. 8 illustrates a flowchart of the primary secondary cell addition and/or activation involved in the present disclosure. As illustrated in FIG. 8, the addition and/or activation flow of the primary secondary cell of secondary cell group based on the LTM measurement may include the following steps:
In S1, the UE transmits a MeasurementReport message to the gNB. The gNB decides to configure LTM and initiates candidate cells preparation.
In S2, the gNB transmits an RRCReconfiguration message to the UE, which includes at least one or more LTM candidate cell configurations (and may be associated with different indexes).

For example, the plurality of candidate cells include at least two candidates, wherein one candidate is a candidate PCell and the other candidate is a candidate PScell.

In S3, the UE stores the LTM candidate cell configurations, and transmits an RRCReconfigurationComplete message to the gNB.

In S4a, optionally, the UE performs DL synchronization with the candidate cell, which at least includes DL synchronization with candidate Pcell and candidate PScell. Optionally, the UE performs early TA acquisition with the candidate cell, wherein the network configures which cells and TA are involved. This is done via the CFRA triggered by the PDCCH order from the source cell, and the TA value of the candidate cell is indicated in the cell switch command.

In S5, the UE performs L1 measurements on the configured candidate cells and transmits measurement reports to the gNB (lower-layer measurement reports, which, unlike L3 reports, may be carried in L1 (e.g., PUSCH or UCI) or MAC CE). The L1 measurement shall be performed in accordance with the configuration requirements specified in the RRC reconfiguration in S2.

The measurement configuration of the target Pcell and target PScell is retained in the candidate cell configuration, and a preliminary evaluation result is acquired via early measurements.

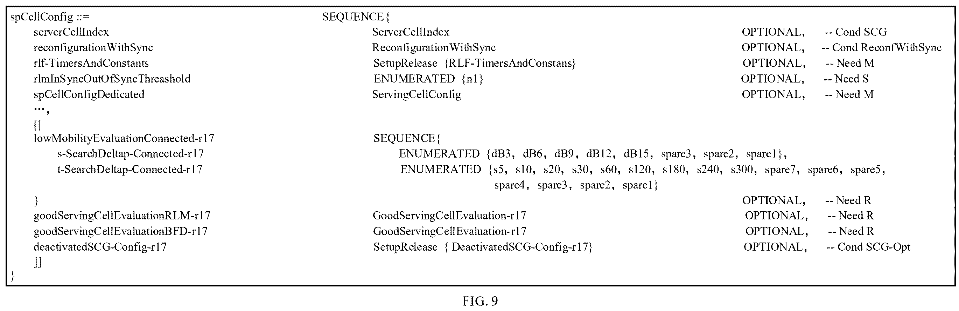

In S6, the gNB decides to perform cell handover to the target cell and transmits a MAC CE for cell handover (which at least includes the candidate configuration index of the target cell). The UE is handed over to the target cell, and the configuration associated with the candidate configuration index takes effect, which at least includes SPCellConfig. A schematic diagram of the configuration information may be illustrated in FIG. 9.

In addition to indicating the configuration index of the candidate Pcell, the MAC CE may also carry the index of the candidate Scell, which is used for the addition/activation of the Scell associated with the candidate Pcell.

Alternatively, in addition to indicating the configuration index of the candidate Pcell, the MAC CE may also carry an indication of whether to add/activate the LTM Scell. In a case where the measurement results of the Scell associated with the candidate Pcell also satisfy the criteria, the indication for adding/activating the LTM Scell takes a true value; otherwise, the indication takes a false value.

In S7, optionally, in a case where the UE has not acquired a valid TA for the target cell, the UE initiates a random access procedure to the target cell.

In S8, the UE completes the LTM cell switch and transmits the RRCReconfigurationComplete message to the target cell. In a case where the UE has performed and successfully completed the random access procedure in S7, the UE considers that the LTM has been successfully completed. For the RACH-less LTM procedure, the UE considers that the LTM has been successfully completed in a case where the network successfully receives the first uplink data message.

In a case where the MAC CE in S6 indicates the addition/activation of the Scell associated with the candidate Pcell (e.g., the scell configuration index/scell index is configured, and/or the indication for adding/activating the LTM Scell takes a true value), the UE initiates the addition/activation of the Scell. In a case where the PScell has already completed the DL synchronization in S4, the UE considers that the SCell has been successfully added/activated upon transmitting the CSI report. Otherwise, the UE needs to perform the RACH procedure on the PScell, and complete the addition/activation of the SCell upon completion of the random access procedure.

### III. Multiple Scell addition/activation based on the LTM measurement

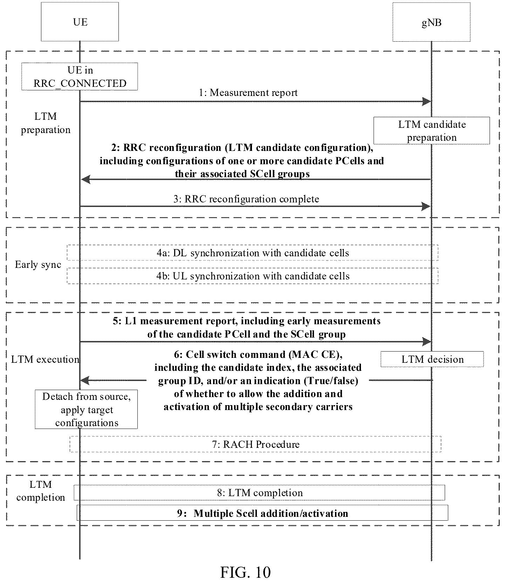

FIG. 10 illustrates another flowchart of the secondary cell addition and/or activation involved in the present disclosure. As illustrated in FIG. 10, the addition and/or activation flow of the secondary cell of the secondary cell group based on the LTM measurement may include the following steps.

In S1, the UE transmits a MeasurementReport message to the gNB. The gNB decides to configure LTM, and initiates candidate cells preparation.

In S2, the gNB transmits an RRCReconfiguration message to the UE, which at least includes one or more LTM candidate cell configurations (and may be associated with different indexes).

For example, the plurality of candidate cells include at least one candidate PCell and a plurality of candidate SCells. A candidate SCell may be associated with a candidate PCell or PScell.

In S3, the UE stores the LTM candidate cell configurations, and transmits an RRCReconfigurationComplete message to the gNB.

In S4a, optionally, the UE performs DL synchronization with the candidate cell, which at least includes DL synchronization with candidate Pcell and candidate PScell. Optionally, the UE performs early TA acquisition with the candidate cell, wherein the network configures which cells and TA are involved. This is done via the CFRA triggered by the PDCCH order from the source cell, and the TA value of the candidate cell is indicated in the cell switch command.

In S5, the UE performs L1 measurements on the configured candidate cells and transmits measurement reports to the gNB (lower-layer measurement reports, which, unlike L3 reports, may be carried in L1 (e.g., PUSCH or UCI) or MAC CE). The L1 measurement shall be performed in accordance with the configuration requirements specified in the RRC reconfiguration in S2.

The measurement configuration of the candidate target Pcell, PScell, and their associated Scells are retained in the candidate cell configuration, and a preliminary evaluation result is acquired via early measurements.

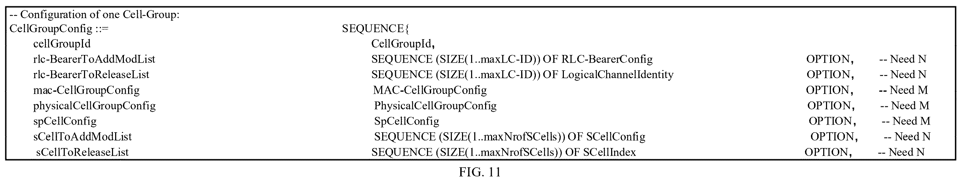

In S6, the gNB decides to perform cell handover to the target cell and transmits a MAC CE for cell handover (which at least includes the candidate configuration index of the target cell). The UE is handed over to the target cell, and the configuration associated with the candidate configuration index takes effect, which at least includes Cellgourpconfig, SPCellconfig, and Scelltoaddmodlist. A schematic diagram of the configuration information may be illustrated in FIG. 11.

In addition to indicating the configuration index of the candidate Pcell, the MAC CE may also carry the index of the candidate PScell, and/or multiple cell IDs or group IDs of the SCells associated with the candidate Pcell or PScell, which are used for the addition/activation of multiple SCells.

Alternatively, the MAC CE may also carry an indication of whether to allow the addition/activation of the grouped SCells associated with the LTM Pcell or PScell. In a case where a certain group of associated SCells satisfies the criteria, the indication for adding/activating the LTM PScell takes a true value; otherwise, the indication takes a false value.

In S7, optionally, in a case where the UE has not acquired a valid TA for the target cell, the UE initiates a random access procedure to the target cell.

In S8, the UE completes the LTM cell switch and transmits the RRCReconfigurationComplete message to the target cell. In a case where the UE has performed and successfully completed the random access procedure in S7, the UE considers that the LTM has been successfully completed. For the RACH-less LTM procedure, the UE considers that the LTM has been successfully completed in a case where the network successfully receives the first uplink data message.

In a case where the groupID is indicated and/or a "true" indication is provided in the MAC CE in S6, the UE initiates the addition/activation of multiple SCells. The UE shall complete the procedure within a certain period of time, wherein the maximum time required for the addition/activation of multiple SCells is the sum of the time required for each individual SCell.

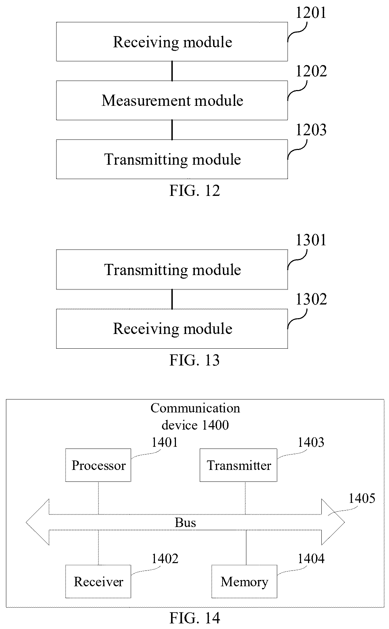

FIG. 12 illustrates a block diagram of an apparatus for indicating carrier aggregation according to some embodiments of the present disclosure. The apparatus implements the functions implemented by the terminal in the method illustrated in FIG. 3 or FIG. 5.

As illustrated in FIG. 12, the apparatus may include: a receiving module 1201, configured to receive an RRC reconfiguration message from a network device, wherein the RRC reconfiguration message is used to carry LTM candidate configuration information, wherein the LTM candidate configuration information is used to indicate a configuration of a candidate primary cell; a measurement module 1202, configured to perform an L1 measurement on the candidate primary cell and the primary secondary cell and/or the secondary cell associated with the candidate primary cell to acquire an L1 measurement report; and a transmitting module 1203, configured to report the L1 measurement report to the network device;
The receiving module 1201 is further configured to receive first indication information from the network device based on the L1 measurement report, wherein the first indication information is used to instruct the terminal to add and/or activate the primary secondary cell and/or the secondary cell for carrier aggregation.

In some embodiments, an association between a primary cell of the terminal and the primary secondary cell and/or the secondary cell for carrier aggregation is indicated by association information; wherein the association information is configured by the first indication information; or the association information is configured by the RRC reconfiguration message and is indicated to take effect by the first indication information.

In some embodiments, the association information includes at least one of: identification information of the primary secondary cell associated with the primary cell, identification information of the secondary cell associated with the primary cell, or identification information of the secondary cell associated with the primary secondary cell.

In some embodiments, in a case where the association information is configured by the RRC reconfiguration message and is indicated to take effect by the first indication information, the first indication information includes a control indication; wherein in a case where the control indication takes a true value, the first indication information is used to instruct to add and/or activate the primary secondary cell and/or the secondary cell associated with the primary cell.

In some embodiments, in a case where the control takes a false value, the first indication information is used to instruct not to add and/or activate the primary secondary cell and/or the secondary cell associated with the primary cell.

In some embodiments, the LTM candidate configuration information includes one or more LTM candidate cell configurations.

In some embodiments, the candidate cell configuration includes at least one of: a measurement configuration for the candidate primary cell; a measurement configuration for a candidate primary secondary cell; a measurement configuration for the secondary cell associated with the candidate primary cell; or a measurement configuration for a secondary cell associated with a candidate primary secondary cell.

In some embodiments, the measurement module 1202 is configured to perform the L1 measurements on the candidate primary cell and the primary secondary cell and/or the secondary cell associated with the candidate primary cell to acquire the L1 measurement report based on measurement configuration in the candidate cell configuration.

In some embodiments, the apparatus further includes: a synchronization module, configured to perform downlink synchronization with the candidate primary cell; and/or perform the downlink synchronization with the candidate primary secondary cell.

In some embodiments, the apparatus further includes: an addition and activation module, configured to add and/or activate the primary secondary cell and/or the secondary cell for carrier aggregation based on the first indication information.

In some embodiments, the transmitting module 1203 is further configured to transmit a CSI report to the network device upon successfully adding and/or activating the primary secondary cell and/or the secondary cell for carrier aggregation.

In some embodiments, the addition and activation module is configured to add and/or activate the primary secondary cell for carrier aggregation in a case where the first indication information instructs the terminal to add and/or activate the primary secondary cell and the terminal has completed the downlink synchronization with the primary secondary cell; or add and/or activate the primary secondary cell for carrier aggregation in a case where the first indication information instructs the terminal to add and/or activate the primary secondary cell and the terminal has not completed the downlink synchronization with the primary secondary cell, initiating a random access procedure to the primary secondary cell, and upon completion of the random access procedure.

FIG. 13 illustrates a block diagram of an apparatus for indicating carrier aggregation according to some embodiments of the present disclosure. The apparatus implements the functions performed by the terminal in the method illustrated in FIG. 4 or FIG. 5.

As illustrated in FIG. 13, the apparatus may include: a transmitting module 1301, configured to transmit an RRC reconfiguration message to a terminal, wherein the RRC reconfiguration message is used to carry LTM candidate configuration information, wherein the LTM candidate configuration information is used to indicate a configuration of a candidate primary cell; and a receiving module 1302, configured to receive an L1 measurement report from the terminal, which is acquired by performing an L1 measurement on the candidate primary cell, and on a primary secondary cell and/or a secondary cell associated with the candidate primary cell.

The transmitting module 1301 is further configured to transmit first indication information to the terminal based on the L1 measurement report, wherein the first indication information is used to instruct the terminal to add and/or activate the primary secondary cell and/or the secondary cell for carrier aggregation.

In some embodiments, an association between a primary cell of the terminal and the primary secondary cell and/or the secondary cell for carrier aggregation is indicated by association information; wherein the association information is configured by the first indication information; or the association information is configured by the RRC reconfiguration message and is indicated to take effect by the first indication information.

In some embodiments, the association information includes at least one of: identification information of the primary secondary cell associated with the primary cell, identification information of the secondary cell associated with the primary cell, or identification information of the secondary cell associated with the primary secondary cell.

In some embodiments, in a case where the association information is configured by the RRC reconfiguration message and is indicated to take effect by the first indication information, the first indication information includes a control indication; wherein in a case where the control indication takes a true value, the first indication information is used to instruct to add and/or activate the primary secondary cell and/or the secondary cell associated with the primary cell.

In some embodiments, in a case where the control takes a false value, the first indication information is used to instruct not to add and/or activate the primary secondary cell and/or the secondary cell associated with the primary cell.

In some embodiments, the LTM candidate configuration information includes one or more LTM candidate cell configurations.

In some embodiments, the candidate cell configuration includes at least one of: a measurement configuration for the candidate primary cell; a measurement configuration for a candidate primary secondary cell; a measurement configuration for the secondary cell associated with the candidate primary cell; or a measurement configuration for a secondary cell associated with a candidate primary secondary cell.

In some embodiments, the apparatus further includes: a determination module, configured to determine that the terminal has successfully added or activated the primary secondary cell and/or the secondary cell for carrier aggregation upon receiving a CSI report from the terminal.

It should be noted that the apparatuses according to the above embodiments are merely illustrated by the division of the above functional modules when implementing their functions. In practice, the above functions may be assigned to different functional modules based on actual needs, that is, the content structures of the apparatuses may be divided into different functional modules to complete all or part of the functions described above.

Regarding the apparatuses in the above embodiments, the specific manner in which each module performs operations has been described in detail in the method embodiments and will not be elaborated herein.

FIG. 14 is a schematic structural diagram of a communication device 1400 according to some embodiments of the present disclosure. The communication device 1400 may include a processor 1401, a receiver 1402, a transmitter 1403, a memory 1404, and a bus 1405.

The processor 1401 includes one or more processing cores, and achieves various functional applications and information processing by running software programs and modules.

The receiver 1402 and the transmitter 1403 may be implemented as a communication assembly. The communication assembly may be a communication chip. The communication chip may be referred to as a transceiver. The memory 1404 is communicably connected to the processor 1401 over the bus 1405. The memory 1404 is configured to store a computer program, and the processor 1401 is configured to run the computer program to perform various processes in the above method embodiments.

In addition, the memory 1404 may be implemented by any type or combination of volatile or non-volatile storage devices including, but not limited to: magnetic or optical disks, electrically-erasable programmable read-only memories (EEPROMs), erasable programmable read-only memories (EPROMs), static random-access memories (SRAMs), read-only memories (ROMs), magnetic memories, flash memories, and programmable read-only memories (PROMs).

In some embodiments, in a case where the communication device 1400 is implemented as the terminal, the receiver 1402 and the processor 1401 run the computer program to cause the communication device to perform the processes performed by the terminal in the method illustrated in FIG. 3 or FIG. 5.

In some embodiments, in a case where the communication device 1400 is implemented as the network device, the transmitter 1403 runs the computer program to cause the communication device to perform the processes performed by the network device in the method illustrated in FIG. 4 or FIG. 5.

Some embodiments of the present disclosure provide a computer-readable storage medium. The storage medium stores a computer program. The computer program, when loaded and run by a processor, causes the processor to perform all or part of the processes performed by a terminal or a network device in the methods illustrated in FIG. 3, FIG. 4, or FIG. 5.

Some embodiments of the present disclosure provide a chip. The chip includes programmable logic circuitry and/or at least one program instruction. The chip is configured to, when running on a communication device, cause the communication device to perform all or part of the processes performed by a terminal or a network device in the methods illustrated in FIG. 3, FIG. 4, or FIG. 5.

Some embodiments of the present disclosure provide a computer program product. The computer program product or a computer program includes one or more computer instructions stored in a computer-readable storage medium. A processor of a communication device reads the one or more computer instructions from the computer-readable storage medium and executes the computer instructions, causing the communication device to perform all or part of the processes performed by a terminal or a network device in the methods illustrated in FIG. 3, FIG. 4, or FIG. 5.

Some embodiments of the present disclosure provide a computer program. The computer program when executed by a processor of a communication device, causes the processor to perform all or part of the processes performed by a terminal or a network device in the methods illustrated in FIG. 3, FIG. 4, or FIG. 5.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are optional embodiments of the present disclosure, but not intended to limit the present disclosure. Any modifications, equivalent replacements, improvements and the like made within the spirit and principles of the present disclosure should be encompassed within the scope of protection of the present disclosure.

## Claims

1. A method for indicating carrier aggregation, performed by a terminal, the method comprising:
receiving a radio resource control (RRC) reconfiguration message from a network device, wherein the RRC reconfiguration message is used to carry Layer 1 (L1)/Layer 2 (L2)-triggered mobility (LTM) candidate configuration information, wherein the LTM candidate configuration information is used to indicate a configuration of a candidate primary cell;
performing an L1 measurement on the candidate primary cell, and on a primary secondary cell and/or a secondary cell associated with the candidate primary cell to acquire an L1 measurement report;
reporting the L1 measurement report to the network device; and
receiving first indication information from the network device based on the L1 measurement report, wherein the first indication information is used to instruct the terminal to add and/or activate the primary secondary cell and/or the secondary cell for carrier aggregation.

2. The method according to claim 1, wherein an association between a primary cell of the terminal and the primary secondary cell and/or the secondary cell for carrier aggregation is indicated by association information;
wherein the association information is configured by the first indication information; or the association information is configured by the RRC reconfiguration message and is indicated to take effect by the first indication information.

3. The method according to claim 2, wherein the association information comprises at least one of:
identification information of the primary secondary cell associated with the primary cell, identification information of the secondary cell associated with the primary cell, or identification information of the secondary cell associated with the primary secondary cell.

4. The method according to claim 2 or 3, wherein in a case where the association information is configured by the RRC reconfiguration message and is indicated to take effect by the first indication information, the first indication information comprises a control indication;
wherein in a case where the control indication takes a true value, the first indication information is used to instruct to add and/or activate the primary secondary cell and/or the secondary cell associated with the primary cell.

5. The method according to claim 4, wherein in a case where the control takes a false value, the first indication information is used to instruct not to add and/or activate the primary secondary cell and/or the secondary cell associated with the primary cell.

6. The method according to any one of claims 1 to 5, wherein the LTM candidate configuration information comprises one or more LTM candidate cell configurations.

7. The method according to claim 6, wherein the candidate cell configuration comprises at least one of:
a measurement configuration for the candidate primary cell;
a measurement configuration for a candidate primary secondary cell;
a measurement configuration for the secondary cell associated with the candidate primary cell;
or
a measurement configuration for a secondary cell associated with a candidate primary secondary cell.

8. The method according to claim 7, wherein performing the L1 measurement on the candidate primary cell and the primary secondary cell and/or the secondary cell associated with the candidate primary cell to acquire the L1 measurement report comprises:
performing the L1 measurements on the candidate primary cell and the primary secondary cell and/or the secondary cell associated with the candidate primary cell to acquire the L1 measurement report based on measurement configuration in the candidate cell configuration.

9. The method according to claim 7 or 8, further comprising:
performing downlink synchronization with the candidate primary cell; and/or
performing the downlink synchronization with the candidate primary secondary cell.

10. The method according to any one of claims 1 to 9, further comprising:
adding and/or activating the primary secondary cell and/or the secondary cell for carrier aggregation based on the first indication information.

11. The method according to claim 10, further comprising:
upon successfully adding and/or activating the primary secondary cell and/or the secondary cell for carrier aggregation, transmitting a channel status indicator (CSI) report to the network device.

12. The method according to claim 10 or 11, wherein adding and/or activating the primary secondary cell and/or the secondary cell for carrier aggregation based on the first indication information comprises:
in a case where the first indication information instructs the terminal to add and/or activate the primary secondary cell and the terminal has completed the downlink synchronization with the primary secondary cell, adding and/or activating the primary secondary cell for carrier aggregation; or
in a case where the first indication information instructs the terminal to add and/or activate the primary secondary cell and the terminal has not completed the downlink synchronization with the primary secondary cell, initiating a random access procedure to the primary secondary cell, and upon completion of the random access procedure, adding and/or activating the primary secondary cell for carrier aggregation.

13. A method for indicating carrier aggregation, performed by a network device, the method comprising:
transmitting a radio resource control (RRC) reconfiguration message to a terminal, wherein the RRC reconfiguration message is used to carry Layer 1 (L1)/Layer 2 (L2)-triggered mobility (LTM) candidate configuration information, and the LTM candidate configuration information is used to indicate a configuration of a candidate primary cell;
receiving an L1 measurement report from the terminal, wherein the L1 measurement report is acquired by performing an L1 measurement on the candidate primary cell, and on a primary secondary cell and/or a secondary cell associated with the candidate primary cell; and
transmitting first indication information to the terminal based on the L1 measurement report, wherein the first indication information is used to instruct the terminal to add and/or activate the primary secondary cell and/or the secondary cell for carrier aggregation.

14. The method according to claim 13, wherein an association between a primary cell of the terminal and the primary secondary cell and/or the secondary cell for carrier aggregation is indicated by association information;
wherein the association information is configured by the first indication information; or the association information is configured by the RRC reconfiguration message and is indicated to take effect by the first indication information.

15. The method according to claim 14, wherein the association information comprises at least one of:
identification information of the primary secondary cell associated with the primary cell, identification information of the secondary cell associated with the primary cell, or identification information of the secondary cell associated with the primary secondary cell.

16. The method according to claim 14 or 15, wherein in a case where the association information is configured by the RRC reconfiguration message and is indicated to take effect by the first indication information, the first indication information comprises a control indication;
wherein in a case where the control indication takes a true value, the first indication information is used to instruct to add and/or activate the primary secondary cell and/or the secondary cell associated with the primary cell.

17. The method according to claim 16, wherein in a case where the control indication has a false value, the first indication information is used to instruct not to add and/or activate the primary secondary cell and/or the secondary cell associated with the primary cell.

18. The method according to any one of claims 13 to 17, wherein the LTM candidate configuration information comprises one or more LTM candidate cell configurations.

19. The method according to claim 18, wherein the candidate cell configuration comprises at least one of:
a measurement configuration for the candidate primary cell;
a measurement configuration for a candidate primary secondary cell;
a measurement configuration for the secondary cell associated with the candidate primary cell;
or
a measurement configuration for a secondary cell associated with a candidate primary secondary cell.

20. The method according to any one of claims 13 to 19, further comprising:
upon receiving a channel status indicator (CSI) report from the terminal, determining that the terminal has successfully added or activated the primary secondary cell and/or the secondary cell for carrier aggregation.

21. An apparatus for indicating carrier aggregation, the apparatus comprising:
a receiving module, configured to receive a radio resource control (RRC) reconfiguration message from a network device, wherein the RRC reconfiguration message is used to carry Layer 1 (L1)/Layer 2 (L2)-triggered mobility (LTM) candidate configuration information, wherein the LTM candidate configuration information is used to indicate a configuration of a candidate primary cell;
a measurement module, configured to perform an L1 measurement on the candidate primary cell and the primary secondary cell and/or the secondary cell associated with the candidate primary cell to acquire an L1 measurement report; and
a transmitting module, configured to report the L1 measurement report to the network device;
wherein the receiving module is further configured to receive first indication information from the network device based on the L1 measurement report, wherein the first indication information is used to instruct the terminal to add and/or activate the primary secondary cell and/or the secondary cell for carrier aggregation.

22. An apparatus for indicating carrier aggregation, the apparatus comprising:
a transmitting module, configured to transmit a radio resource control (RRC) reconfiguration message to a terminal, wherein the RRC reconfiguration message is used to carry Layer 1 (L1)/Layer 2 (L2)-triggered mobility (LTM) candidate configuration information, wherein the LTM candidate configuration information is used to indicate a configuration of a candidate primary cell; and
a receiving module, configured to receive an L1 measurement report from the terminal, which is acquired by performing an L1 measurement on the candidate primary cell, and on a primary secondary cell and/or a secondary cell associated with the candidate primary cell;
wherein the transmitting module is further configured to transmit first indication information to the terminal based on the L1 measurement report, wherein the first indication information is used to instruct the terminal to add and/or activate the primary secondary cell and/or the secondary cell for carrier aggregation.

23. A terminal, comprising: a processor, a memory, and a transceiver;
wherein the memory stores one or more computer programs, and the processor, when running the one or more computer programs, causes the terminal to perform the method for indicating carrier aggregation as defined in any one of claims 1 to 12.

24. A network device, comprising: a processor, a memory, and a transceiver;
wherein the memory stores one or more computer programs, and the processor, when running the one or more computer programs, causes the network device to perform the method for indicating carrier aggregation as defined in any one of claims 13 to 20.

25. A computer-readable storage medium, storing one or more computer programs, wherein the one or more computer programs, when run by a processor of a communication device, cause the communication device to perform the method for indicating carrier aggregation as defined in any one of claims 1 to 20.

26. A chip, comprising: programmable logic circuitry and/or at least one program instruction, wherein the chip, when running on a communication device, causes the communication device to perform the method for indicating carrier aggregation as defined in any one of claims 1 to 20.

27. A computer program product, comprising: one or more computer instructions, wherein the one or more computer instructions are stored in a computer-readable storage medium, and the one or more computer instructions, when read and executed by a processor of a communication device, cause the communication device to perform the method for indicating carrier aggregation as defined in any one of claims 1 to 20.

28. A computer program, wherein the computer program, when run by a processor of a communication device, causes the communication device to perform the method for indicating carrier aggregation as defined in any one of claims 1 to 20.
